# EUROPÄISCHE PATENTSCHRIFT

(11) **EP 0 811 025 B1**
(45) Veröffentlichungstag und Bekanntmachung des Hinweises auf die Patenterteilung: **09.12.1998**
(21) Anmeldenummer: 96901803.5
(22) Anmeldetag: 10.02.1996
(51) Int. Cl.: C08F 226/06, C11D 3/37

(54) **AGGLOMERIERTE, FEINTEILIGE, VERNETZTE VINYLIMIDAZOL-COPOLYMERISATE, VERFAHREN ZU IHRER HERSTELLUNG UND IHRE VERWENDUNG**
AGGLOMERATED FINE-PARTICLE CROSS-LINKED VINYL IMIDAZOLE COPOLYMERS, PROCESSES FOR PRODUCING THE SAID COPOLYMERS AND THE USE THEREOF
COPOLYMERES DE VINYLIMIDAZOLE RETICULES, A PARTICULES FINES, AGGLOMERES, LEUR PROCEDE DE PRODUCTION ET LEUR UTILISATION

(30) Priorität: 20.02.1995 DE 19505750
(43) Veröffentlichungstag der Anmeldung: 10.12.1997
(73) Patentinhaber: BASF AKTIENGESELLSCHAFT, 67056 Ludwigshafen (DE)
(72) Erfinder: SCHADE, Christian, D-67061 Ludwigshafen (DE); SCHNEIDER, Karl-Heinrich, D-67271 Kleinkarlbach (DE)
(86) Internationale Anmeldenummer: EP9600575
(87) Internationale Veröffentlichungsnummer: WO9626229

(56) Entgegenhaltungen:
- EP-A- 0 623 630
- DE-A- 3 324 835

## Beschreibung

Die Erfindung betrifft agglomerierte, feinteilige, vernetzte Vinylimidazol-Copolymerisate, die erhätlich sind durch radikalisch initiierte Polymerisation von N-Vinylimidazolen der Formel 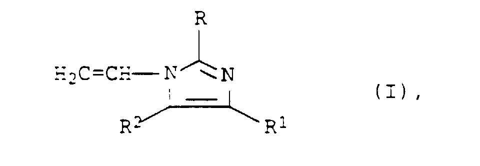 in der R, R¹, R² gleich oder verschieden sind und für H, C₁- bis C₄-Alkyl oder Phenyl stehen, mit mindestens einem Vernetzer,
- gegebenenfalls anderen wasserlöslichen monoethylenisch ungesättigten Monomeren und
- gegebenenfalls wasserunlöslichen monoethylenisch ungesättigten Monomeren
in der wäßrigen Phase einer Wasser-in-Öl-Emulsion in Gegenwart mindestens eines Emulgators zur Stabilisierung der Wasser-in-Öl-Monomer-Emulsion, azeotropes Abdestillieren des Wassers aus der Wasser-in-Öl-Polymersuspension und Isolieren der feinteiligen Polymerisate, die aus Agglomeraten aus Primärteilchen mit einem mittleren Teilchendurchmesser bis zu 35 µm aufgebaut sind und wobei die Agglomerate einen mittleren Teilchendurchmesser in dem Bereich von 1 bis 250 µm haben; Verfahren zu ihrer Herstellung und ihre Verwendung als Zusatz zu Waschmitteln zur Inhibierung der Farbstoffübertragung während des Waschvorgangs.

Aus der DE-A-3 324 835 sind vernetzte 1-Vinyl-imidazol-Polymerisate bekannt, die durch Polymerisieren von 1-Vinyl-imidazol mit mindestens einem Vernetzer in der wäßrigen Phase einer Wasser-in-Öl-Emulsion in Gegenwart eines lipophilen Schutzkolloids zur Stabilisierung der Wasser-in-Öl-Monomer-Emulsion und eines Radikale bildenden Polymerisationsinitiators und anschließendes azeotropes Abdestillieren des Wassers aus der Wasser-in-Öl-Polymersuspension und Isolieren der perlförmigen Polymerisate hergestellt werden. Um die Wasser-in-Öl-Monomer-Emulsion zu stabilisieren verwendet man lipophile Schutzkolloide wie beispielsweise Cellulosederivate, polymere Maleinsäurederivate mit Alkylvinylethern, Sorbitanester, ethoxylierte Fettsäureamide, Glycerinfetterster und Umsetzungsprodukte von Polybutadienölen, die Allyl-ständige Wasserstoffatome enthalten, mit Maleinsäureanhydrid. Man erhält perlförmige vernetzte Vinylimidazol-Copolymerisate mit einem mittleren Teilchendurchmesser von 40 bis 150 µm.

Aus der EP-A-0 412 388 sind feinteilige agglomerierte Polymerisatpulver bekannt, die durch Polymerisieren von wasserlöslichen Monomeren in der wäßrigen Phase einer Wasser-in-Öl-Emulsion Gegenwart von Wasser-in-Öl-Emulgatoren und von Radikale bildenden Polymerisationsinitiatoren, azeotropes Entwässern der Wasser-in-Öl-Polymersuspensionen und Agglomerieren der Primärteilchen in Gegenwart von Schutzkolloiden und Isolieren der suspendierten, agglomerierten Polymerisatpulver hergestellt werden. Als geeignete wasserlösliche Monomere werden beispielsweise Mischungen aus N-Vinylformamid und N-Vinylimidazol angegeben. Die wasserlöslichen Monomeren können gegebenenfalls in Gegenwart von 50 bis 5.000 ppm mindestens eines Vernetzers polymerisiert werden. Die agglomerierten Teilchen haben eine mittlere Teilchengröße von mindestens 50 µm. Sie zerfallen beim Eintragen in Wasser leicht in die Primärteilchen, die eine mittlere Teilchengröße von 0,1 bis 20 µm haben.

Aus der EP-A-0 623 630 sind Wasser-in-Öl-Polymer-Emulsionen bekannt, die durch Polymerisieren von wasserlöslichen monoethylenisch ungesättigten Monomeren in der wäßrigen Phase einer Wasser-in-Öl-Emulsion erhältlich sind. Die entstehenden, wasserlöslichen Polymerisate haben eine mittlere Teilchengröße von 0,1 bis 20 µm. Als in Betracht kommende Monomere werden auch N-Vinylpyrrolidon und N-Vinylimidazol genannt. Die Öl-Phase der Wasser-in-Öl-Polymer-Emulsionen besteht zu mindestens 50 Gew.% aus einem Öl pflanzlicher oder tierischer Herkunft. Die Wasser-in-Öl-Monomer-Emulsion wird mit Hilfe einer Emulgatormischung stabilisiert, die aus folgenden Komponenten besteht:
(a) 5 bis 95 Gew.-% eines Block- oder Pfropfcopolymeren der allgemeinen Formel (A-COO)ₘ-B, in der A ein hydrophobes Polymer mit einer Molmasse von mehr als 500 g/mol auf Basis einer Poly(hydroxycarbonsäure) ist, B ein bifunktionelles hydrophiles Polymer mit einer Molmasse von mehr als 500 g/mol auf Basis eines Polyalkylenoxids ist und m mindestens 2 ist und
(b) 5 bis 95 Gew.-% eines anderen Wasser-in-Öl-Emulgators mit einer Molmasse <1.000 g/mol, z.B. Sorbitanmonooleat.

Die Wasser-in-Öl-Polymer-Emulsionen enthalten außerdem ein Netzmittel, das beim Eintragen der Emulsionen in Wasser eine Inversion der Phasen bewirkt und die Polymeren freisetzt, so daß sie sich relativ rasch auflösen. Die Polymerisate werden jedoch nicht in fester Form isoliert.

Der Erfindung liegt die Aufgabe zugrunde, agglomerierte, feinteilige vernetzte Vinylimidazol-Polymerisate zur Verfügung zu stellen.

Die Aufgabe wird erfindungsgemäß gelöst mit agglomerierten, feinteiligen, vernetzten Vinylimidazol-Copolymerisaten, die erhältlich sind durch radikalisch initiierte Polymerisation von N-Vinylimidazolen der Formel 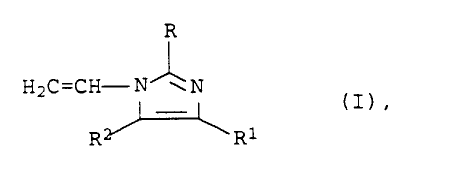 in der R, R¹, R² gleich oder verschieden sind und für H, C₁- bis C₄-Alkyl oder Phenyl stehen, mit mindestens einem Vernetzer,
- gegebenenfalls anderen wasserlöslichen monoethylenisch ungesättigten Monomeren und
- gegebenenfalls wasserunlöslichen monoethylenisch ungesättigten Monomeren
in der wäßrigen Phase einer Wasser-in-Öl-Emulsion in Gegenwart mindestens eines Emulgators zur Stabilisierung der Wasser-in-Öl-Monomer-Emulsion, azeotropes Abdestillieren des Wassers aus der Wasser-in-Öl-Polymersuspension und Isolieren der feinteiligen Polymerisate, die aus Agglomeraten aus Primärteilchen mit einem mittleren Teilchendurchmesser bis zu 35 µm aufgebaut sind und wobei die Agglomerate einen mittleren Teilchendurchmesser in dem Bereich von 1 bis 250 µm haben; wenn man als Emulgator Blockcopolymerisate des Typs AB oder ABA oder aus A und B aufgebaute Kammpolymerisate einsetzt, wobei A ein hydrophober Polymerblock mit einer Molmasse von >500 g/mol und B ein hydrophiler Polymerblock mit einer Molmasse von >500 g/mol ist.

Gegenstand der Erfindung ist außerdem ein Verfahren zur Herstellung der genannten agglomerierten, feinteiligen, vernetzten Vinylimidazol-Copolymerisaten nach Anspruch 1 durch radikalisch initiierte Polymerisation von N-Vinylimidazolen der Formel I mit mindestens einem Vernetzer,
- gegebenenfalls anderen wasserlöslichen monoethylenisch ungesättigten Monomeren und
- gegebenenfalls wasserunlöslichen monoethylenisch ungesättigten Monomeren
in der wäßrigen Phase einer Wasser-in-Öl-Emulsion in Gegenwart mindestens eines Emulgators zur Stabilisierung der Wasser-in-Öl-Monomer-Emulsion, azeotropes Abdestillieren des Wassers aus der Wasser-in-Öl-Polymersuspension und Isolieren der feinteiligen Polymerisate, die aus Agglomeraten aus Primärteilchen mit einem mittleren Teilchendurchmesser bis zu 35 µm aufgebaut sind und wobei die Agglomerate einen mittleren Teilchendurchmesser in dem Bereich von 1 bis 250 µm haben; wenn man als Emulgator Blockcopolymerisate des Typs AB oder ABA oder aus A und B aufgebaute Kammpolymerisate einsetzt, wobei A ein hydrophober Polymerblock mit einer Molmasse von >500 g/mol und B ein hydrophiler Polymerblock mit einer Molmasse von >500 g/mol ist.

Als Monomere der Formel I eignen sich beispielsweise 1-Vinylimidazol, l-Vinyl-2-methyl-imidazol, 1-Vinyl-2-ethyl-imidazol, 1-Vinyl-2-ethyl-4-methyl-imidazol, 1-Vinyl-2-ethyl-5-methyl-imidazol, l-Vinyl-4-methyl-imidazol und 1-Vinyl-5-methyl-imidazol. Aus dieser Gruppe von Monomeren werden 1-Vinyl-imidazol und 1-Vinyl-2-methyl-imidazol besonders bevorzugt. Die bei der Polymerisation eingesetzten Monomermischungen enthalten beispielsweise 10 bis 99,9, vorzugsweise 20 bis 99,5, ganz besonders bevorzugt 35 bis 99,5 Gew.-%, mindestens eines Vinyl-imidazols der Formel I.

Als Vernetzter kommen solche Monomeren in Betracht, die mindestens 2 nicht konjugierte ethylenisch ungesättigte Doppelbindungen im Molekül enthalten. Verbindungen dieser Art sind beispielsweise Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Vernetzer enthalten aber mindestens zwei ethylenisch ungesättigte Gruppen. Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglycol, 3-Methylpentan-1,5-diol, 2,5-Dimethyl-1,3-hexandiol, 2,2,4-Trimethyl-1,3-pentandiol, 1,2-cyclohexandiol, 1,4-cyclohexandiol, 1,4-Bis(hydroxymethyl)cyclohexan, Hydroxypivalinsäure-neopentylglycolmonoester, 2,2-Bis(4-hydroxyphenyl)propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiopentan-1,5-diol, sowie Polyethylenglykole, Polypropylenglykole und Polytetrahydrofurane mit Molekulargewichten von jeweils 200 bis 10 000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Triethoxycyanursäure, Sorbitan, Zucker wie Saccharose, Glucose, Mannose. Selbstverständlich können die mehrwertigen Alkohole aucn nach Umsetzung mit Ethylenoxid oder Propylenoxid als die entsprechenden Ethoxylate bzw. Propoxylate eingesetzt werden.

Weitere geeignete Vernetzer sind die Vinylester oder die Ester einwertiger, ungesättigter Alkohole mit ethylenisch ungesättigten C₃- bis C₆-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-l-ol. Man kann aber auch die einwertigen, ungesättigten Alkohole mit mehrwertigen Carbonsäure verestern, beispielsweise Malonsäure, Weinsäure, Trimellitsäure, Phthalsäure, Terephthalsäure, Citronensäure oder Bernsteinsäure.

Weitere geeignete Vernetzer sind Ester ungesättigter Carbonsäuren mit den oben beschriebenen mehrwertigen Alkoholen, beispielsweise der Ölsäure, Crotonsäure, Zimtsäure oder 10-Undecensäure.

Geeignet sind außerdem geradkettig oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z.B. Divinylbenzol, Divinyltoluol, 1,7-Octadien, 1,9-Decadien, 4-Vinyl-l-cyclohexen, Trivinylcyclohexan oder Polybutadiene mit Molekulargewichten von 200 - 20 000. Als Vernetzer sind ferner geeignet die Acrylsäureamide, Methacrylsäureamide und N-Allylamine von mindestens zweiwertigen Aminen. Solche Amine sind zum Beispiel 1,2-Diaminomethan, 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren wie Acrylsäure, Methacrylsäure, Itaconsäure, Maleinsäure, oder mindestens zweiwertigen Carbonsäuren, wie sie oben beschrieben wurden.

Geeignet sind auch N-Vinyl-Verbindungen von Harnstoffderivaten und von mindestens zweiwertigen Amiden, Cyanuraten oder Urethanen, beispielsweise von Harnstoff, Ethylenharnstoff, Propylenharnstoff oder Weinsäurediamid.

Weitere geeignete Vernetzer sind Divinyldioxan, Tetraallylsilan oder Tetravinylsilan. Selbstverständlich können auch Mischungen der vorgenannten Verbindungen eingesetzt werden.

Bevorzugte Vernetzer sind Di(meth)acrylester von Polyalkylenoxiden mit mindestens 3 Ethylenoxid-Einheiten im Molekül, Di- oder Tri(meth)acrylester von Polyhydroxy-Verbindungen, die gegebenenfalls mit 1 bis 50 Ethylenoxid-Einheiten pro OH-Gruppe umgesetzt sein können, Methylenbisacrylamid, Ethylenbisacrylamid, Divinyldioxan, Triallylamin, N,N'-Divinylethylenharnstoff und N,N'-Divinyldiimidazol. Ein besonders bevorzugt eingesetzter Vernetzer ist N,N'-Divinylethylenharnstoff. Die Vernetzter werden in Mengen von 0,1 bis 90, vorzugsweise 0,2 bis 20 Gew.-% eingesetzt.

Bei der Herstellung der Copolymerisate kann man gegebenenfalls andere wasserlösliche monoethylenisch ungesättigte Monomere mitverwenden, z.B. N-Vinylpyrrolidon, N-Vinylcaprolactam, N-Vinyloxazolidon und N-Vinyltriazol. Die zur Polymerisation eingesetzte Monomer-Mischungen können außerdem folgende andere wasserlösliche Monomere enthalten:

Acrylamid, Methacrylamid, N-Methylolacrylamid, 1-Vinyl-3-alkylimidazolium-Salze mit 1 bis 30 C-Atomen in der Alkylkette, Diethyl- und Dimethylaminoalkyl(meth)acrylate und -(meth)acrylamide oder daraus abgeleitete quaternäre Ammoniumsalze, Hydroxyalkyl(meth)acrylate mit 2 bis 6 C-Atomen in der Alkylkette. Besonders bevorzugt wird N-Vinylpyrrolidon eingesetzt.

Die gegebenenfalls bei der Copolymerisation eingesetzten anderen wasserlöslichen monoethylenisch ungesättigten Monomeren werden beispielsweise in Mengen bis zu 89,9 %, bezogen auf die Monomer-Mischung, verwendet. Falls sie zur Modifizierung der Vinylimidazol-Copolymerisate eingesetzt werden, verwendet man sie vorzugsweise in Mengen von 20 bis 80 Gew.-%.

Bei der Copolymerisation können gegebenenfalls wasserunlösliche monoethylenisch ungesättigte Monomere zur Modifizierung der vernetzten Copolymerisate mitverwendet werden. Die wasserunlöslichen Monomeren werden dabei lediglich in einer Menge eingesetzt, daß die Monomer-Mischungen noch wasserlöslich sind. Geeignete wasserunlösliche monoethylenisch ungesättigte Monomere sind beispielsweise Acrylester von Alkoholen mit 1 bis 18 Kohlenstoff-Atomen, z.B. Acrylsäuremethylester, Acrylsäureethylester, Acrylsäureisobutylester und Acrylsäure-2-ethylhexylester sowie die entsprechenden Ester der Methacrylsäure, Vinylester von gesättigten C₁-bis C₄-Carbonsäuren, beispielsweise Vinylformiat, Vinylacetat, Vinylpropionat und Vinylbutyrat sowie Maleinester, z.B. Maleinsäuredimethylester.

Falls man bei der Polymerisation wasserunlösliche monoethylenisch ungesättigte Monomere zur Modifizierung mitverwendet, setzt man diese Monomeren vorzugsweise in Mengen von 0,1 bis 20 Gew.-% ein.

Die Synthese der vernetzten Copolymerisate erfolgt nach den bekannten Verfahren der umgekehrten Suspensions- oder Emulsionspolymerisation, wobei man die Monomeren in wäßriger Lösung in einem mit Wasser nicht mischbaren Lösemittel unter Verwendung eines Emulgators zur Stabilisierung der Wasser-in-Öl-Monomer-Emulsion und mindestens eines Radikale bildenden Polymerisationsinitiators emulgiert und polymerisiert. Erfindungsgemäß verwendet man als Emulgator zur Stabilisierung der Wasser-in-Öl-Monomer-Emulsion, Blockcopolymerisate des Typs AB oder ABA oder aus A und B aufgebaute Kammcopolymerisate, wobei A ein hydrophober Polymerblock mit einer Molmasse von mehr als 500 g/mol und B ein hydrophiler Polymerblock mit einer Molmasse von mehr als 500 g/mol ist.

Als Öl-Phase der Reaktionsmischung sind alle Lösemittel geeignet, die mit Wasser einer Temperatur von 25°C zu weniger als 5 % mischbar sind.

Geeignete Lösungsmittel sind beispielsweise Silikone, aliphatische, aromatische oder chlorierte Kohlenwasserstoffe mit einem Siedebereich von 40 bis 200°C. Die bevorzugten Kohlenwasserstoffe sind Pentan, Hexan, Cyclohexan, Heptan, Octan, i-Octan, Methylcyclohexan, Toluol, Xylol oder Mischungen der genannten Kohlenwasserstoffe. Vorzugsweise verwendet man Kohlenwasserstoffe mit einem Siedebereich von 50 bis 150°C. Die Öl-Phase der Wasser-in-Öl-Polymersuspensionen beträgt in den meisten Fällen beispielsweise 30 bis 90 Gew.-%, bezogen auf die gesamte Emulsion.

Die Polymerisation der Monomeren wird in Gegenwart der üblichen Polymerisationsinitiatoren durchgeführt. Zum Einsatz gelangen beispielsweise Verbindungen wie Kaliumperoxodisulfat, Ammoniumperoxodisulfat, 2,2'-Azobis (2-amidinopropan)dihydrochlorid, 4,4'-Azobis(4-cyanopentansäure), 2,2'-Azobisisobutyronitril, 2,2'-Azobis(2-methylbutyronitril), 2,2'-Azobis(2,4-dimethylvaleronitril), tert.-Butylperoctoat, tert.-Amylperpivalat, tert.-Butylperneodecanoat, tert.-Butylperpivalat sowie Redoxsysteme z.B. Mischungen aus Ammoniumpersulfat und Eisen-II-Sulfat. Die Polymerisationsinitiatoren werden in den üblichen Mengen eingesetzt, z.B. 0,01 bis 3, vorzugsweise 0,02 bis 2 Gew.-%, bezogen auf die Monomeren. Die Polymerisation kann z.B. so geführt werden, daß man zunächst in Gegenwart von 0,5 bis 1 Gew.-% mindestens eines Initiators die Monomeren weitgehend polymerisiert und bei einer Nachpolymerisation nochmals 0,5 bis 1 Gew.-%, bezogen auf die ursprünglich eingesetzte Menge an Monomeren, zusetzt. Die Nachpolymerisation kann beispielsweise bei der selben Temperatur vorgenommen werden wie die Hauptpolymerisation oder auch bei höheren Temperaturen, d.h. beispielsweise bei Temperaturen, die 5 bis 40°C oberhalb der Temperatur liegen, bei der die Hauptpolymerisation durchgeführt wird. Man kann einen einzigen Initiator oder auch eine Mischung aus verschiedenen Initiatoren verwenden. In manchen Fällen ist es vorteilhaft, eine Mischung aus zwei Initiatoren einzusetzen, die unterschiedliche Halbwertszeiten haben.

Die zur Stabilisierung der Wasser-in-Öl-Emulsion erfindungsgemäß zu verwendenden Emulgatoren sind aus mindestens einem hydrophilen und mindestens einem hydrophoben Block aufgebaut, wobei die Blöcke jeweils Molmassen von mehr als 500 bis 100.000, vorzugsweise 550 bis 50.000 und ganz besonders bevorzugt 600 bis 20.000 haben. Die Emulgatoren können kammartig oder linear aufgebaut sein. Lineare Blockcopolymerisate des Typs AB oder des Typs ABA, wobei A einen hydrophoben und B einen hydrophilen Polymerblock darstellt, sind bekannt, vgl. EP-A-0 000 424 und EP-A-0 623 630. Vorzugsweise sind die erfindungsgemäß zu verwendenden Emulgatoren in dem benutzten, mit Wasser nicht mischbaren Lösungsmittel löslich.

Die hydrophilen Blöcke sind für sich genommen zu mehr als 1 %, vorzugsweise 5 Gew.-% in Wasser bei 25°C löslich. Beispiele sind Blöcke, die aus Ethylenoxid, Propylenoxid- oder Butylenoxid-Einheiten, gegebenenfalls in Mischung untereinander, aufgebaut sind. Die Hydroxylgruppen der Alkylenoxidblöcke können durch Sulfat- oder Phosphatestergruppen zusätzlich modifiziert werden. Geeignete weitere Blöcke leiten sich ab von Polytetrahydrofuran, Poly(1,3-dioxolan), Poly(2-methyl-2-oxazolin), Polyethylenimin, Polyvinylalkohol, Polyvinylamin, Polyvinylpyrrolidon, Poly(meth)acrylsäure, Polyamidoaminen, Gelatine, Cellulosederivaten oder Stärke. Besonders bevorzugt werden Blöcke auf Basis von Ethylenoxid- und/oder Propylenoxid-Einheiten.

Die hydrophoben Teile der Emulgatoren bestehen beispielsweise aus Blöcken von Polystyrol, Polyalkyl(meth)acrylaten, Polysiloxanen, Poly(hydroxyalkansäuren) wie z.B. Polykondensaten aus 2-Hydroxypropansäure, 2-Hydroxybutansäure, 2-Hydroxyisobutansäure, 2-Hydroxyheptansäure, 10-Hydroxydecansäure, 12-Hydroxydodecansäure, 12-Hydroxystearinsäure, 16-Hydroxyhexadecansäure, 2-Hydroxystearinsäure, 2-Hydroxyvaleriansäure oder die entsprechenden aus Lactonen erhaltenen Kondensate, Kondensate aus Diolen und Dicarbonsäuren wie Polyethylenadipat, Polylactame wie Polycaprolactam, Polyisobutylen oder Polyurethane. Bevorzugt werden Blöcke aus Polystyrol, Polymethylmethacrylat, Polybutylmethacrylat, Polyhydroxyalkansäuren mit mehr als 10 C-Atomen in der Alkaneinheit, Polydimethylsiloxanen oder Polyisobutylenen. Ganz besonders bevorzugt werden Blöcke aus Polystyrol, Polyhydroxyfettsäuren wie Poly(12-hydroxystearinsäure) oder Polydimethylsiloxanen.

Als Emulgator werden vorzugsweise solche Blockcopolymerisate eingesetzt, wobei
- A ein hydrophober Polymerblock aus der Gruppe Polystyrol, Poly(hydroxycarbonsäuren), Polydimethylsiloxane oder Polyisobutylene und
- B ein hydrophiler Polymerblock aus der Gruppe der C₂- bis C₄-Polyalkylenglykole
ist.

Die erfindungsgemäß zu verwendenden Emulgatoren werden in Mengen von 0,1 bis 15, vorzugsweise 0,2 bis 10, ganz besonders bevorzugt 0,5 bis 7 Gew.-%, bezogen auf die Monomeren, eingesetzt.

Bei der Polymerisation kann man gegebenenfalls zusätzlich solche Emulgatoren mitverwenden, die üblicherweise bei der umgekehrten Emulsionspolymerisation eingesetzt werden. Falls solche Emulgatoren mitverwendet werden, führt man die Polymerisation zusätzlich in Gegenwart von 0,1 bis 10 Gew.-%, bevorzugt 0,2 bis 7 Gew.-% mindestens eines Wasser-in-Öl-Emulgators aus der Gruppe der Ester von C₈- bis C₂₂-Carbonsäuren mit Glycerin, Sorbitan, Saccharose, Polyglycerin oder der entsprechenden ethoxylierten Alkohole durch, wobei man pro Mol der Alkohole bis zu 80 mol Ethylenoxid addiert.

Bei der Herstellung der Wasser-in-Öl-Polymerisate kann man gegebenenfalls zusätzlich bis zu 10 Gew.-%, bezogen auf die gesamte Emulsion, eines Netzmittels mit einem HLB-Wert von mehr als 10 verwenden. (Zur Definition des HLB-Wertes vgl. W. C. Griffin, Journal of Society of Cosmetic Chemist, Band 1, 311 (1950)). Geeignete Netzmittel mit einem HLB-Wert von mehr als 10 sind beispielsweise ethoxylierte Alkylphenole, Dialkylester von Natriumsulfosoccinaten, bei der die Alkylgruppe mindestens 3 Kohlenstoffatome hat, Seifen, die sich von Fettsäuren mit 10 bis 22 Kohlenstoffatomen ableiten, Alkalisalze von Alkyl- oder Alkenylsulfaten mit 10 bis 26 Kohlenstoffatomen sowie ethoxylierte Fettalkohole und ethoxylierte Amine.

Die Polymerisation erfolgt in der üblichen Weise z.B. durch Erhitzen der Wasser-in-Öl-Monomer-Emulsionen unter Durchmischen bei Temperaturen in dem Bereich von 30 bis 140, vorzugsweise 40 bis 120°C. Die Konzentration des Polymeren beträgt beispielsweise 5 bis 60 Gew.-%, bezogen auf die Gesamtsuspension. Um die Polymerisate aus den Emulsionen zu gewinnen, wird das Wasser aus der Wasser-in-Öl-Polymersuspension azeotrop abdestilliert. Nach der Entwässerung liegen Polymersuspensionen vor, aus denen das Polymer leicht gewonnen werden kann, z.B. durch Zentrifugieren oder Abfiltrieren der Polymerisate. Ein wichtiges Merkmal der Erfindung ist, daß die erhaltenen Polymerisate in agglomerierter Form vorliegen. Die Agglomerate sind aus Primärteilchen aufgebaut, die einen mittleren Teilchendurchmesser von bis zu 35 µm besitzen. Die Größe der Primärteilchen beträgt in den meisten Fällen unter 20, vorzugsweise von 0,05 bis 5 µm. Die Agglomerate haben mittlere Teilchendurchmesser, die in dem Bereich von 1 bis 250, bevorzugt 2 bis 100 µm betragen. Das Verfahren wird insbesondere so geführt, daß agglomerierte Teilchen mit einer Größe von 2,5 bis 35 µm entstehen. Die Agglomerate werden oft bereits während der Polymerisationsphase gebildet. Die Agglomeration kann daneben auch während der azeotropen Destillation eintreten.

Die Agglomeration kann durch Zusatz eines Hilfsmittels, beispielsweise von Polyethylenglykolen, Polypropylenglykolen, Polyvinylalkoholen oder teilverseiften Polyvinylacetaten, Copolymerisaten aus Maleinsäureanhydrid und Alkenen, Copolymerisaten aus Ethylen und Acrylsäure, Copolymerisaten aus Maleinsäure und Acrylsäure, Celluloseethern, Celluloseestern, Carboxymethylcellulosen, Polyolen wie Glycerin, Ethylenglykol, Propylenglykol oder Butylenglykol oder Polyvinylpyrrolidonen unterstützt werden. Die Menge des Agglomerationshilfsmittels beträgt 0,1 bis 15, vorzugsweise 0,2 bis 10 Gew.-%, bezogen auf die Menge des Polymerisats. Üblicherweise wird das Hilfsmittel erst nach Beendigung der Polymerisation der Wasser-in-Öl-Polymersuspension zugesetzt. Die oben angegebenen Teilchengrößen für die agglomerierten Teilchen beziehen sich auf die wasserfreien Polymerisate. Beim Einrühren in Wasser können die Agglomerate in kleinere Agglomerate oder in die Primärteilchen zerfallen.

Die agglomerierten, feinteiligen, vernetzten Copolymerisate werden beispielsweise als Zusatz zu Waschmitteln in Mengen von 0,1 bis 4 Gew.-%, bezogen auf die Waschmittelformulierung, zur Inhibierung der Farbstoffübertragung während des Waschvorgangs verwendet. Die feinteiligen, vernetzten Copolymerisate eignen sich außerdem zur Absorption von Schwermetallen aus Abwässern oder Getränken.

Die Prozentangaben in den Beispielen bedeuten Gewichtsprozent.

### Blockcopolymer 1

ABA-Blockcopolymer aus Polyhydroxystearinsäure und Polyethylenoxid mit einem Molekulargewicht von 7.500, vertrieben unter dem Namen Hypermer B 246 von der Firma ICI.

### Blockcopolymer 2

AB-Blockcopolymer aus einer Polystyroleinheit mit einem Molekulargewicht von ca. 3.000 und einem Polyethylenoxid-Block mit 25 Ethylenoxideinheiten im Molekül.

### Blockcopolymer 3

Alkyl- und polyethermodifiziertes Polydimethylsiloxan; Verkaufsprodukt der Firma Goldschmidt AG, Deutschland, unter dem Namen "Tegopren 7006".

### Beispiel 1

In einer Rührapparatur mit aufgesetztem Rückflußkühler wurde ein Gemisch aus 800 g Cyclohexan, 5 g Sorbitanmonooleat, 5 g Blockcopolymer 1 und 1 g 2,2'-Azobis(2-methylbutyronitril) vorgelegt und unter Rühren im Stickstoffstrom bis zum schwachen Sieden unter Rückfluß erwärmt. Bei dieser Temperatur wurde während 30 Minuten ein Zulauf aus 100 g N-Vinylpyrrolidon, 100 g N-Vinylimidazol, 10 g N,N'-Divinylethylenharnstoff und 140 g Wasser zugegeben. Der Ansatz wurde weitere 6 Stunden bei schwachem Sieden unter Rückfluß gerührt.

Anschließend wurde das Wasser azeotrop abdestilliert, das erhaltenen Produkt abfiltriert und im Vakuumtrockenschrank bei 50°C getrocknet. Man erhielt ein feines weißes Pulver, das aus Agglomeraten mit einer mittleren Teilchengröße von 5,6 µm bestand (bestimmt durch Fraunhofer-Beugung in Cyclohexan-Suspension). Eine rasterelektronenmikroskopische Aufnahme des getrockneten Pulvers zeigte den Aufbau der Agglomerate aus kleineren Primärteilchen mit einem mittleren Teilchendurchmesser im Bereich von 0,1 bis 0,5 µm. Der wasserlösliche Anteil im Polymer, bestimmt durch Extraktion in einer Soxhlet-Apparatur, betrug weniger als 2 %.

### Beispiele 2 bis 9

Beispiel 1 wurde mit den jeweils aus der Tabelle ersichtlichen Änderungen wiederholt. Die mittleren Teilchengrößen der Agglomerate sind in der Tabelle ebenfalls angegeben.

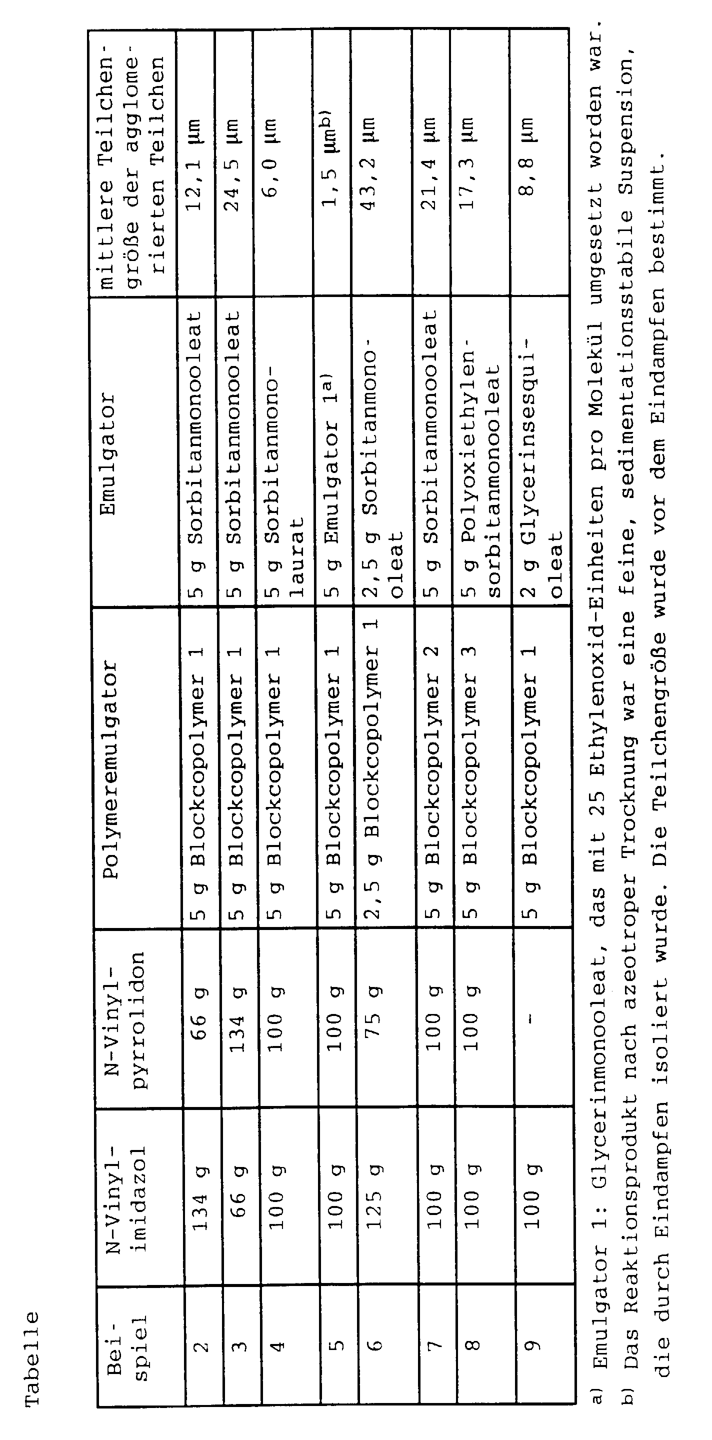

## Patentansprüche

1. Agglomerierte, feinteilige, vernetzte Vinylimidazol-Copolymerisate, die erhältlich sind durch radikalisch initiierte Polymerisation von N-Vinylimidazolen der Formel 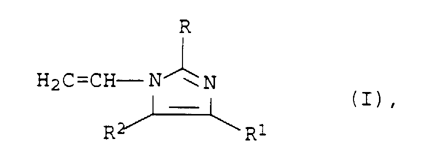 in der R, R¹, R² gleich oder verschieden sind und für H, C₁-bis C₄-Alkyl oder Phenyl stehen, mit mindestens einem Vernetzer,
- gegebenenfalls anderen wasserlöslichen monoethylenisch ungesättigten Monomeren und
- gegebenenfalls wasserunlöslichen monoethylenisch ungesättigten Monomeren
in der wäßrigen Phase einer Wasser-in-Öl-Emulsion in Gegenwart mindestens eines Emulgators zur Stabilisierung der Wasser-in-Öl-Monomer-Emulsion, azeotropes Abdestillieren des Wassers aus der Wasser-in-Öl-Polymersuspension und Isolieren der feinteiligen Polymerisate, die aus Agglomeraten aus Primärteilchen mit einem mittleren Teilchendurchmesser bis zu 35 µm aufgebaut sind und wobei die Agglomerate einen mittleren Teilchendurchmesser in dem Bereich von 1 bis 250 µm haben, dadurch gekennzeichnet, daß man als Emulgator Blockcopolymerisate des Typs AB oder ABA oder aus A und B aufgebaute Kammcopolymerisate einsetzt, wobei A ein hydrophober Polymerblock mit einer Molmasse von >500 g/mol und B ein hydrophiler Polymerblock mit einer Molmasse von >500 g/mol ist.

2. Verfahren zur Herstellung von agglomerierten, feinteiligen, vernetzten Vinylimidazol-Copolymerisaten nach Anspruch 1 durch radikalisch initiierte Polymerisation von N-Vinylimidazolen der Formel 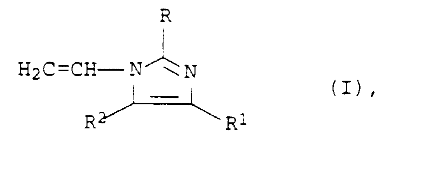 in der R, R¹, R² gleich oder verschieden sind und für H, C₁-bis C₄-Alkyl oder Phenyl stehen, mit mindestens einem Vernetzer,
- gegebenenfalls anderen wasserlöslichen monoethylenisch ungesättigten Monomeren und
- gegebenenfalls wasserunlöslichen monoethylenisch ungesättigten Monomeren
in der wäßrigen Phase einer Wasser-in-Öl-Emulsion in Gegenwart mindestens eines Emulgators zur Stabilisierung der Wasser-in-Öl-Monomer-Emulsion, azeotropes Abdestillieren des Wassers aus der Wasser-in-Öl-Polymersuspension und Isolieren der feinteiligen Polymerisate, die aus Agglomeraten aus Primärteilchen mit einem mittleren Teilchendurchmesser bis zu 35 µm aufgebaut sind und wobei die Agglomerate einen mittleren Teilchendurchmesser in dem Bereich von 1 bis 250 µm haben,dadurch gekennzeichnet, daß man als Emulgator Blockcopolymerisate des Typs AB oder ABA oder aus A und B aufgebaute Kammcopolymerisate einsetzt, wobei A ein hydrophober Polymerblock mit einer Molmasse von >500 g/mol und B ein hydrophiler Polymerblock mit einer Molmasse von >500 g/mol ist.

3. Verfahren nach Anspruch 2, dadurch gekennzeichnet, daß man als Emulgator Blockcopolymerisate einsetzt, wobei
- A ein hydrophober Polymerblock aus der Gruppe Polystyrol, Poly(hydroxycarbonsäuren), Polydimethylsiloxane oder Polyisobutylene und
- B ein hydrophiler Polymerblock aus der Gruppe der C₂- bis C₄- Polyalkylenglykole
ist.

4. Verfahren nach Anspruch 2 oder 3, dadurch gekennzeichnet, daß man die Emulgatoren in Mengen von 0,1 bis 15 Gew.-%, bezogen auf die Monomeren, einsetzt.

5. Verfahren nach einem der Ansprüche 2 bis 4, dadurch gekennzeichnet, daß man die Polymerisation zusätzlich in Gegenwart von 0,1 bis 10 Gew.-% mindestens eines Wasser-in-Öl-Emulgators aus der Gruppe der Ester von C₈- bis C₂₂-Carbonsäuren mit Glycerin, Sorbitan, Saccharose, Polyglycerin oder der entsprechenden ethoxylierten Alkohole durchführt, wobei man pro Mol der Alkohole bis zu 80 Mol Ethylenoxid addiert.

6. Verwendung der agglomerierten, feinteiligen, vernetzten Copolymerisate nach Anspruch 1 als Zusatz zu Waschmitteln in Mengen von 0,1 bis 4 Gew.-%, bezogen auf die Waschmittelformulierung, zur Inhibierung der Farbstoffübertragung während des Waschvorgangs.

## Claims

1. Agglomerated, finely divided, crosslinked vinylimidazole copolymers obtainable by free-radically initiated polymerization of N-vinylimidazoles of the formula 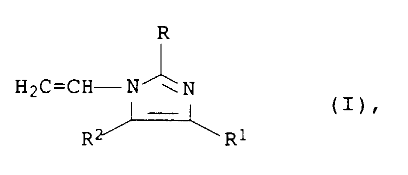 where R, R¹ and R² are identical or different and each is H, C₁-C₄-alkyl or phenyl, with at least one crosslinker,
- optionally other water-soluble monoethylenically unsaturated monomers, and
- optionally water-insoluble monoethylenically unsaturated monomers
in the aqueous phase of a water-in-oil emulsion in the presence of at least one emulsifier to stabilize the water-in-oil monomer emulsion, azeotropic distillative removal of the water from the water-in-oil polymer suspension, and isolation of the finely divided polymers, which are composed of agglomerates composed of primary particles having an average particle diameter of up to 35 µm, said agglomerates having an average particle diameter within the range from 1 to 250 µm, wherefor the emulsifier used comprises block copolymers of the type AB or ABA or comb copolymers constructed from A and B, where A is a hydrophobic polymer block having a molecular weight of >500 g/mol and B is a hydrophilic polymer block having a molecular weight of >500 g/mol.

2. A process for producing agglomerated, finely divided, crosslinked vinylimidazole copolymers as claimed in claim 1 by free-radically initiated polymerization of N-vinylimidazoles of the formula 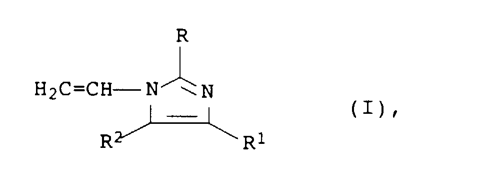 where R, R¹ and R² are identical or different and each is H, C₁-C₄-alkyl or phenyl, with at least one crosslinker,
- optionally other water-soluble monoethylenically unsaturated monomers, and
- optionally water-insoluble monoethylenically unsaturated monomers
in the aqueous phase of a water-in-oil emulsion in the presence of at least one emulsifier to stabilize the water-in-oil monomer emulsion, azeotropic distillative removal of the water from the water-in-oil polymer suspension, and isolating the finely divided polymers, which are composed of agglomerates composed of primary particles having an average particle diameter of up to 35 µm, said agglomerates having an average particle diameter within the range from 1 to 250 µm, which comprises using an emulsifier which comprises block copolymers of the type AB or ABA or comb copolymers constructed from A and B, where A is a hydrophobic polymer block having a molecular weight of >500 g/mol and B is a hydrophilic polymer block having a molecular weight of >500 g/mol.

3. A process as claimed in claim 2, wherein the emulsifier used comprises block copolymers where
- A is a hydrophobic polymer block selected from the group consisting of polystyrene, poly(hydroxycarboxylic acid)s, polydimethylsiloxanes and polyisobutylenes, and
- B is a hydrophilic polymer block selected from the group of the C₂-C₄-polyalkylene glycols.

4. A process as claimed in claim 2 or 3, wherein the emulsifiers are used in amounts of from 0.1 to 15% by weight, based on the monomers.

5. A process as claimed in any of claims 2 to 4, wherein the polymerization is carried out in the additional presence of from 0.1 to 10% by weight of at least one water-in-oil emulsifier selected from the group of the esters of C₈-C₂₂-carboxylic acids with glycerol, sorbitan, sucrose, polyglycerol or the corresponding ethoxylated alcohols, up to 80 mol of ethylene oxide being added per mole of the alcohols.

6. The use of the agglomerated, finely divided, crosslinked copolymers of claim 1 in detergents in amounts from 0.1 to 4% by weight, based on the detergent formulation, to inhibit the transfer of dye during the wash.

## Revendications

1. Copolymères de vinylimidazole réticulés, finement divisés et agglomérés, pouvant être obtenus par polymérisation amorcée de façon radicalaire de N-vinylimidazoles de formule 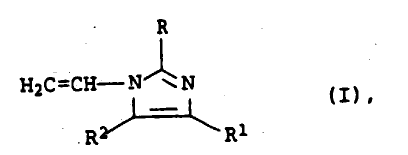 dans laquelle R, R¹, R² sont identiques ou différents et sont mis pour H, un groupement alkyle en C₁-C₄ ou phényle, avec au moins un agent réticulant,
- éventuellement d'autres monomères solubles dans l'eau et à insaturation monoéthylénique et
- éventuellement des monomères insolubles dans l'eau et à insaturation monoéthylénique,
dans la phase aqueuse d'une émulsion eau-dans-huile, en présence d'au moins un émulsifiant, pour la stabilisation de l'émulsion eau-dans-huile de monomères, élimination par distillation azéotrope de l'eau de la suspension eau-dans-huile de polymères, et isolement des polymères finement divisés, construits à partir d'agglomérats de particules primaires ayant un diamètre moyen de particules allant jusqu'à 35 µm, et où les agglomérats ont un diamètre moyen de particules dans la gamme de 1 à 250 µm, caractérisé en ce que l'on utilise, en tant qu'émulsifiant, des copolymères séquencés du type AB ou ABA ou bien des copolymères à structure de peigne construits à partir de A et B, A étant une séquence polymère hydrophobe dont la masse molaire est > 500 g/mol et B étant une séquence polymère hydrophile dont la masse molaire est > 500 g/mol.

2. Procédé de préparation de copolymères de vinylimidazole réticulés, finement divisés et agglomérés, par polymérisation amorcée de façon radicalaire de N-vinylimidazoles de formule 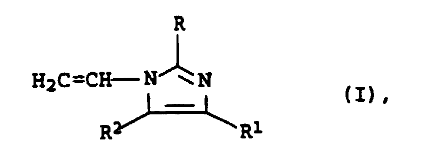 dans laquelle R, R¹, R² sont identiques ou différents et sont mis pour H, un groupement alkyle en C₁-C₄ ou phényle, avec au moins un agent réticulant,
- éventuellement d'autres monomères solubles dans l'eau et à insaturation monoéthylénique et
- éventuellement des monomères insolubles dans l'eau et à insaturation monoéthylénique,
dans la phase aqueuse d'une émulsion eau-dans-huile, en présence d'au moins un émulsifiant, pour la stabilisation de l'émulsion eau-dans-huile des monomères, élimination par distillation azéotrope de l'eau de la suspension eau-dans-huile de polymères, et isolement des polymères finement divisés, construits à partir d'agglomérats de particules primaires ayant un diamètre moyen de particules allant jusqu'à 35 µm, et où les agglomérats ont un diamètre moyen de particules dans la gamme de 1 à 250 µm, caractérisé en ce que l'on utilise, en tant qu'émulsifiant, des copolymères séquencés du type AB ou ABA ou bien de copolymères à structure de peigne construits à partir de A et B, A étant une séquence polymère hydrophobe dont la masse molaire est > 500 g/mol et B étant une séquence polymère hydrophile dont la masse molaire est > 500 g/mol.

3. Procédé selon la revendication 2, caractérisé en ce que l'on utilise, en tant qu'émulsifiant, des copolymères séquencés, dans lesquels
- A est une séquence polymère hydrophobe choisie dans le groupe constitué par le polystyrène, les poly(acides hydroxycarboxyliques), les polydiméthylsiloxanes ou les polyisobutylènes et
- B est une séquence polymère hydrophile choisie dans le groupe constitué par les polyalkylèneglycols en C₂-C₄.

4. Procédé selon la revendication 2 ou 3, caractérisé en ce que l'on utilise les émulsifiants dans des quantités de 0,1-15% en poids, par rapport aux monomères.

5. Procédé selon l'une quelconque des revendications 2 à 4, caractérisé en ce que l'on mène en outre la polymérisation en présence de 0,1-10% en poids d'au moins un émulsifiant eau-dans-huile choisi dans le groupe constitué par les esters des acides carboxyliques en C₈-C₂₂ avec du glycérol, du sorbitane, du saccharose, du polyglycérol ou les alcools éthoxylés correspondants, et dans lequel on utilise jusqu'à 80 moles d'oxyde d'éthylène par mole d'alcool.

6. Utilisation de copolymères réticulés, finement divisés et agglomérés, selon la revendication 1, en tant qu'additif à des produits de lavage, dans des quantités de 0,1-4% en poids, par rapport à la formulation du produit de lavage, pour l'inhibition du transfert de couleur pendant le processus de lavage.
